# EUROPEAN PATENT APPLICATION

(11) **EP 1 887 349 A2**
(43) Date of publication of application: **13.02.2008**
(21) Application number: 07380234.0
(22) Date of filing: 09.08.2007
(51) Int. Cl.: G01N 27/447

(54) **Partially disposable electrophoresis device**

(30) Priority: 11.08.2006 ES 200602189
(71) Applicant: UNIVERSIDAD DEL PAIS VASCO-EUSKAL HERRIKO UNIBERSITATEA, 48940 Leioa (Vizcaya) (ES); Laboratorios aidelos SRL, 48150 Sondika Vizcaya (ES)
(72) Inventor: Martinez de Pancorbo, Ma de los Angeles, 48993 Getxo (Vizcaya) (ES); Rosique Sola, Melania Julieta, 48620 Plentzia (Vizcaya) (ES); Ramos De Pablo, Rodrigo, 01009 Vitoria-Gasteiz (Alava) (ES); Eguskiza Madariaga, Gaizka, 48630 Gorliz (Vizcaya) (ES)
(74) Representative: Carpintero Lopez, Francisco

(57) **Abstract**

The invention relates to a partially disposable electrophoresis device, with a simple and therefore very low cost configuration. More specifically, the invention consists of two assemblies. A first assembly (10), disposable, that comprises that a tank (11) made of thin plastic containing the agarose gel (12), and a lid (13). This tank does not incorporate the platinum wire electrodes or electrical connections. Optionally, the base of the tank (11) has points or protrusions (16) that make it possible to position the gel (12) thus eliminating the need for a gel-carrying tray. A second assembly of elements (20), non-disposable, consists of an inner lid (21) that does incorporate the platinum wire electrodes, an external lid (23) that incorporates electrical connections through connectors (27), (27') and cables (28), (28') for connection to the DC supply and an outer lower tray (24).

## Description

### OBJECT OF THE INVENTION

The object of the invention is a partially disposable electrophoresis device, with a simple configuration that is, therefore, very low cost. More specifically, the invention comprises two assemblies. The first assembly, which is disposable, includes a thin plastic tank and a lid. This tank contains the agarose gel inside. This tank does not contain the platinum wire electrodes or electrical connections. Optionally, the bottom of the tank may have points or protrusions that make it possible to position the gel, thus eliminating the need for a gel-carrying tray. The second non-disposable assembly of elements comprises a lid that incorporates the platinum wire electrodes, an outer lid, a support tank and a lower tray. The outer lid incorporates the electrical connectors and cables for connecting the device to the external direct current source.

### BACKGROUND OF THE INVENTION

Electrophoresis devices, known as electrophoresis tanks, generally consist of an open-topped container, designed to contain a tray whereon agarose gel is placed, leaving the gel completely covered in a migration solution during the electrophoresis process. This tank is made of rigid plastic and a pair of platinum wire electrodes is embedded in its walls, connected to an external direct current source.

The cost of these tanks is fairly high, especially if they only need to be used occasionally, for example in school laboratories and teaching centres, mainly due to the fact that incorporating the platinum wire electrodes in the base of the tank, increases the cost of the assembly. At the same time, the electrophoresis tank is manufactured in 1 cm thick methacrylate, which makes the assembly considerably more expensive.

To date, improvements have been made in the sense of supplying already prepared agarose gels to facilitate user's tasks, but there is no record of gels offered incorporated into the lower inner part of the disposable tank. On a separate note, to date the problem of designing low cost electrophoresis tanks has not been tackled, which any teaching centre could afford, even in countries with scarce training funds.

The present invention resolves the abovementioned drawbacks, through the creation of a very low cost electrophoresis device. The device comprises a first assembly of elements which includes a very low cost disposable electrophoresis tank, and a second assembly of reusable elements, which includes the electrodes and also has a simple configuration that makes it economical.

### DESCRIPTION OF THE INVENTION

The present invention relates to a partially disposable electrophoresis device. More specifically, the invention consists of two assemblies:
● A first assembly of elements, which are all disposable, consisting of an open container or electrophoresis tank with the agarose gel inside and a lid that seals the open container hermetically.
● A second assembly of non-disposable elements, consisting of an inner electrophoresis lid, wherein the electrodes are fixed, adjusting hermetically to the abovementioned electrophoresis tank, a support tank for this lid, an outer lid with the electrical connections and a lower tray.

Next is a brief description of the disposable elements of the first assembly. The tank is made of thin plastic, and placed inside is the agarose gel and migration solution. This tank does not incorporate the electrodes or platinum wire. Optionally, the bottom of the tank may have points or protrusions that help to position the gel, thus eliminating the need to use a gel-carrying tray. The lid, which is also made of plastic, seals the tank hermetically, in such a way that it will be used after the electrophoresis process in order to cover and close the tank containing the residues. Therefore, the open container serves as an electrophoresis tank, as a means for carrying the gel, and as a residue container once electrophoresis is completed.

The second assembly of non-disposable elements is described next. The inner electrophoresis lid incorporates two bananas or male connectors to which fragments of platinum wire are attached; this inner lid fits hermetically inside the electrophoresis tank.

The platinum wires are arranged vertically in relation to the inner lid in such a way that when the inner lid is fitted on the open container, the free ends of the platinum wires are arranged inside the open container. The length of the platinum wires is sufficient so that when the open container contains a migration solution, the free ends of the platinum wires remain partially submerged in the migration solution.

The support tank is an auxiliary element, with a similar configuration to the electrophoresis tank of the previous assembly and serves as a support for the inner lid when it is not in use. The outer electrophoresis lid has two female bananas, which receive the male bananas of the inner lid; attached to the female bananas are the corresponding cables for electrical connection to a DC supply. Finally, this assembly has a lower tray whereon the set of the two previous elements are placed. The reason for the lid and lower tray is to prevent the user being able to lift the inner lid while to the electrical current is connected.

The model described above resolves the cost issue because by being partially disposable, it achieves a very low cost solution for the disposable elements and permits a higher number of reuses of the non-disposable elements, at the same time as the solution proposed for the latter components considerably reduces the cost in relation to existing market solutions. The disposable electrophoresis tank is a thin plastic container, which costs no more than 1 euro, in comparison to standard 1 cm-thick methacrylate tanks, which are very expensive. The elements of the second assembly, which are kept for reuse, are designed with total simplicity, for example the platinum electrodes are incorporated in the tank lid, instead of the base, which makes it possible to reduce the length of required platinum wire from 1/4 to 1/8. Bearing in mind that this is one of the assembly's most expensive components, the cost has been reduced to less than a tenth of the usual cost.

### BRIEF DESCRIPTION OF THE DRAWINGS

To complete the description and contribute to a better understanding of the characteristics of the invention, a set of drawings is included as an integral part of this description, which by way of illustration but not limitation, represents the following:
- Figure 1: shows the two sub-assemblies of the present application.
- Figure 2: shows a view in explosion of the disposable assembly, to facilitate identification of its components.
- Figure 3: shows a view in explosion of the non-disposable assembly, to facilitate identification of its components.
- Figure 4: is a detail of the tank's inner lid.
- Figure 5: is a detail of the tank's outer lid.
- Figure 6: schematically shows the use process.

### DESCRIPTION OF A PREFERRED EMBODIMENT OF THE INVENTION

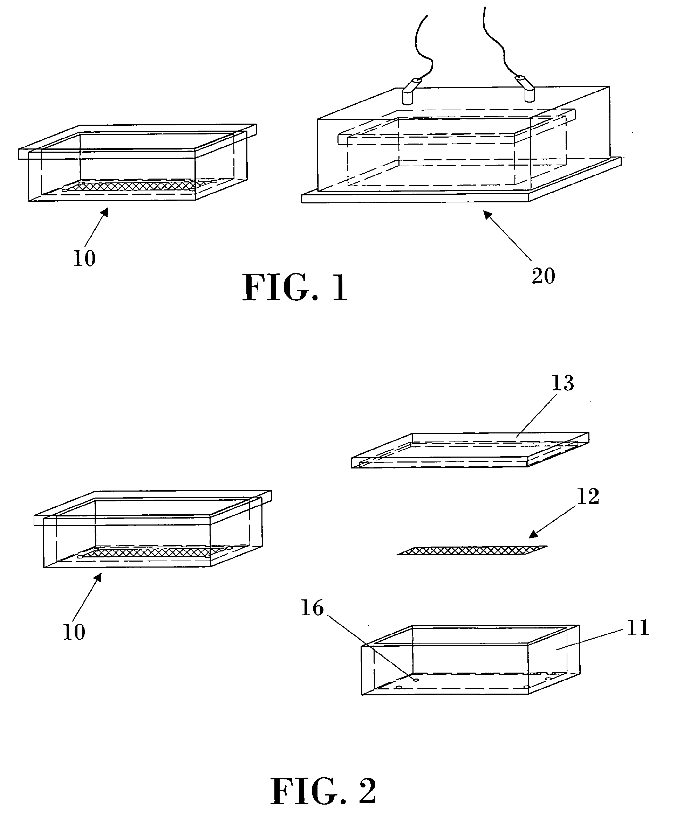

The device is in the form of a partially disposable assembly, as shown in Fig. 1 in other words comprising two assemblies, one that is disposable (10) and one that is non-disposable (20).

The disposable assembly (10), as shown in Fig. 2, incorporates an open container or electrophoresis tank (11), made of plastic, which in turn contains the agarose gel (12), and a lid (13) also made of plastic, that hermetically adjusts to the electrophoresis tank (11). Optionally, the bottom of the tank (11) has points or protrusions (16) that help to position the gel (12), thus eliminating the need to use a gel-carrying tray.

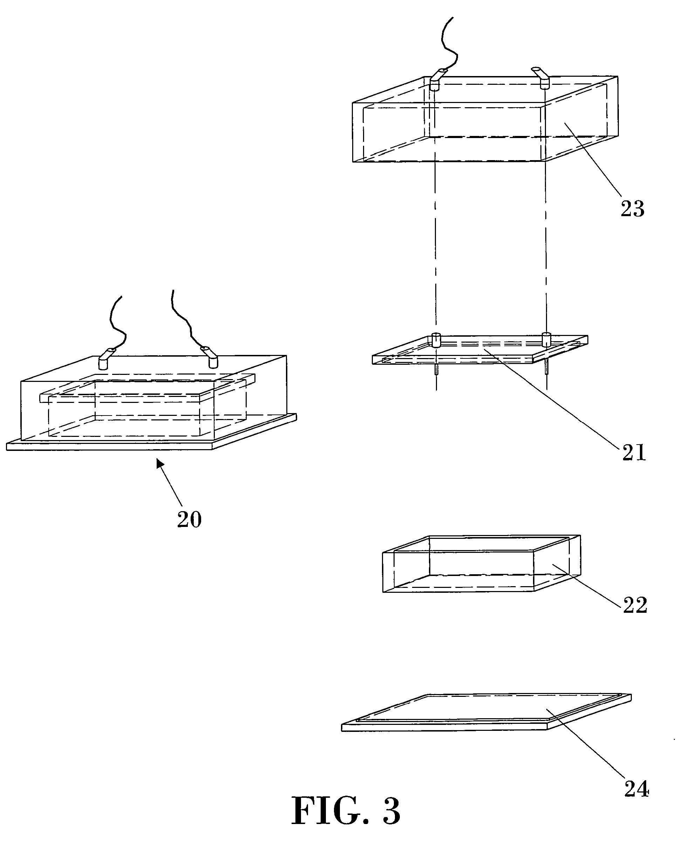

As shown in Fig. 3, the non-disposable assembly (20) incorporates an inner lid (21), a support tank (22) for storing the inner lid (21) while not used in the electrophoresis process, an outer lid (23) and an outer lower tray (24). The inner lid (21), and the outer lid (23) as well as the lower tray (24), are used together with the electrophoresis tank (11) during the electrophoresis process, as explained below.

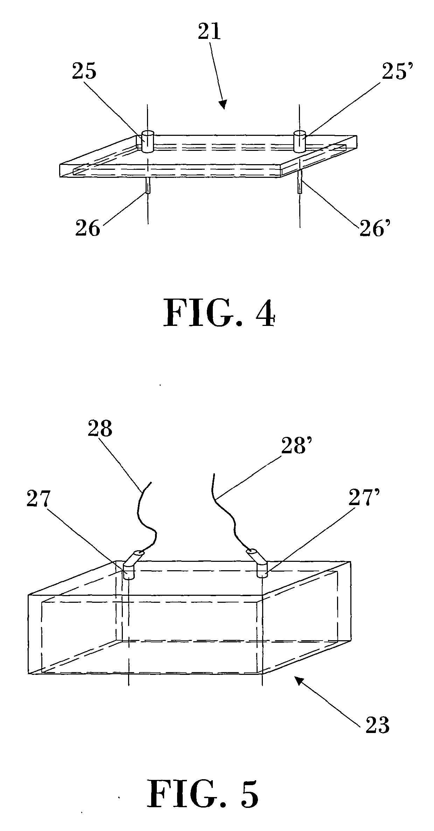

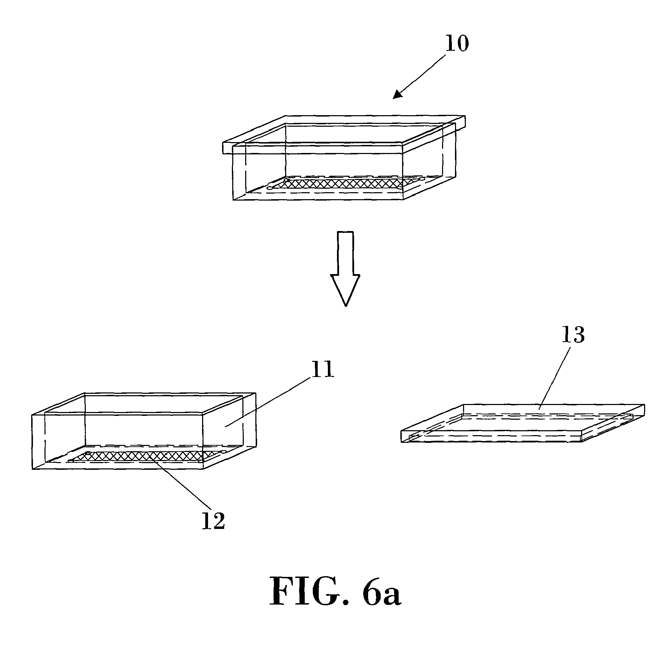

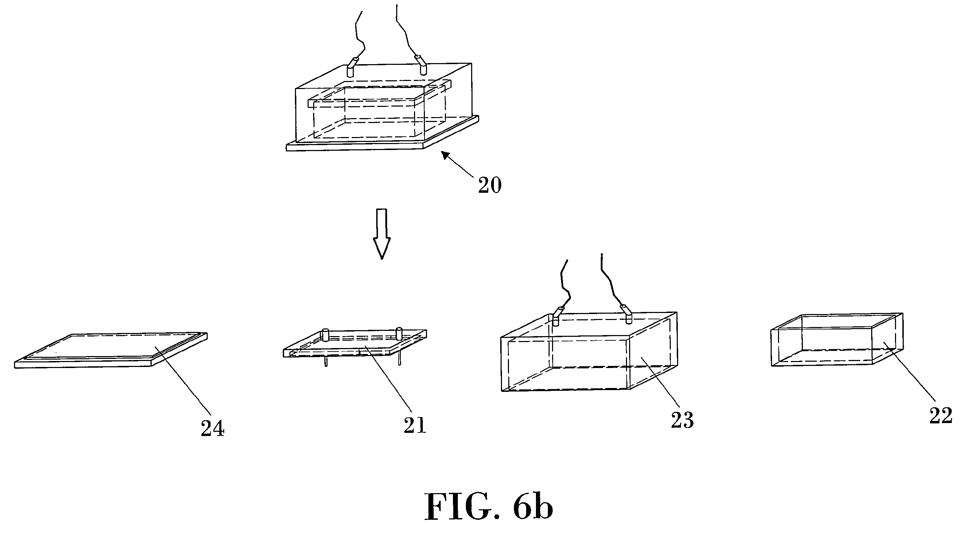

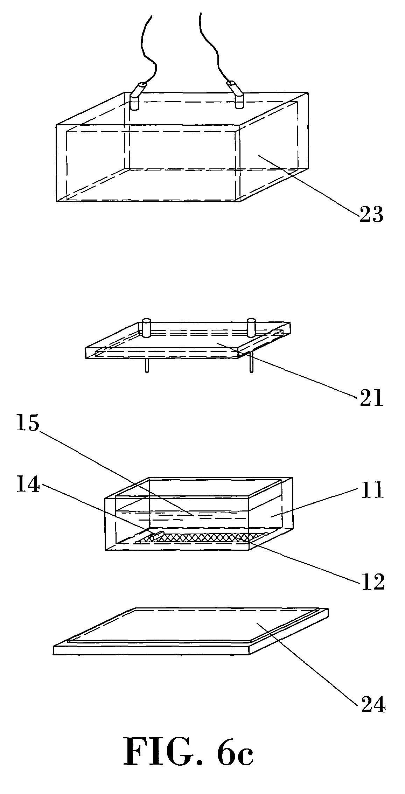

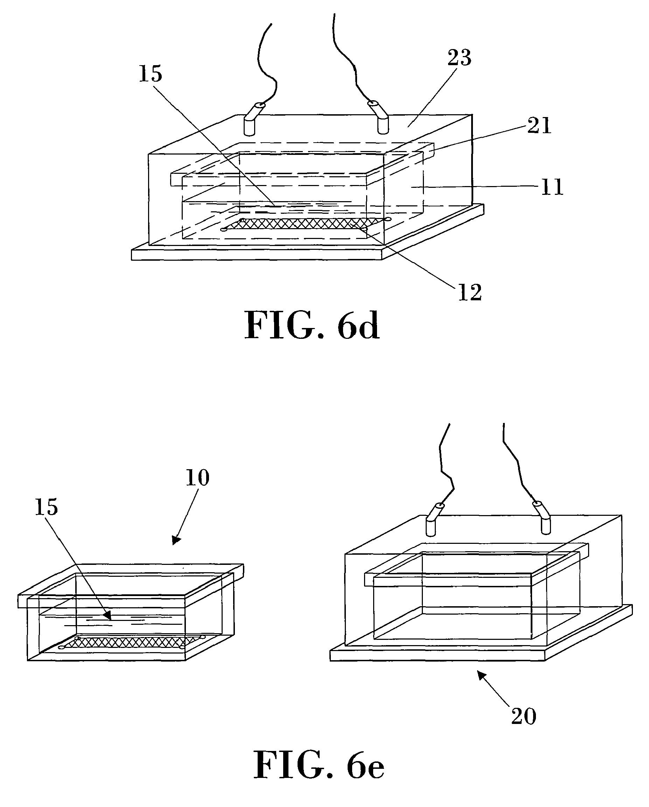

The inner lid (21), as shown in the detail of Fig. 4, includes two bananas or male connectors (25), (25'), each of which is attached to a piece of platinum wire (26), (26'), with a length equivalent to that which separates the lid (21) from the base of the tank (11) minus 1 cm., as can be seen in the assembly shown in Fig. 6 d). The lid (21) fits hermetically into the tank (11) since its design is similar to that of the support tank (22). The outer lid (23) incorporates two bananas or female connectors (27), (27'), as shown in Fig. 5, which connect electrically to the male connectors (25), (25') of the inner lid (21). Also, the cables (28), (28') connected to the bananas or female connectors (27), (27') close the electrical circuit consisting of the platinum electrodes (26) (26'), and the external DC supply (not shown) to conduct the electrophoresis process. The assembly ready for the electrophoresis process itself is shown in Fig. 6 d). At the same time, the outer lid (23) adjusts hermetically above the tray (24), which makes it impossible for the user to lift the inner lid (21) during the electrophoresis process, leaving it totally protected for the time that the assembly is connected to the DC supply.

The electrophoresis tank (11), which is disposable, thus serves several purposes. Prior to using the assembly, to contain the agarose gel (12), as shown in Fig. 2; during the process, as the tank wherein electrophoresis takes place, as shown in Fig. 6 d) and upon completion of the process, as a container for the residues of the process, when it is covered once more with the lid (13), with hermetic sealing over the tank (11) as mentioned previously, and as shown in Fig. 6 e).

In order to fully clarify the device that is the object of the present description, next a description is provided of how the assembly is used, as shown graphically in the sequence of drawings of Fig. 6 a), b), c), d) and e). For first use, the user must obtain the two parts of the described assembly comprising the disposable assembly (10) and the non-disposable assembly (11). For subsequent uses, it will only be necessary to obtain the disposable assembly (10).

To start the process and in relation to the disposable assembly (10) as shown in Fig. 6 a), the lid (13) is removed from the tank (11), and the lid (13) is put to one side for its subsequent reuse, and the samples (14) are added, in solid support, inside the gel (12). Next, and as shown in Fig. 6 b), the components of the non-disposable assembly (20) are separated. As shown in Fig. 6 c), the tank (11) is placed on the outer lower tray (24), then the buffer is added to the migration solution (15), the tank is covered (11) with the inner lid (21) and the outer lid (23) is closed, joining the male connectors (25), (25') to the female connectors (27), (27') and adjusting hermetically to the outer lower tray (24). At this point, the assembly is as shown in Fig. 6 d) and it can be connected electrically to the DC supply (not shown) for the electrophoresis process itself to take place.

Once the process is over, the assembly is disconnected from the power supply, the external lid (23) is removed, as well as the internal lid (21), which is placed in its support tank (22) and the described components are stored together with the outer lower tray (24), for subsequent reuse. Meanwhile, the electrophoresis tank (11) is covered with the lid (13), and contains the residues of the process. The outcome of the above sequence of operations is shown in Fig. 6 e).

Previously, it was described that sample (14) is in solid support. Obviously, the device of the invention could be used for liquid samples (with micro pipette), simply by placing the tank (11) on the outer lower tray (24) before depositing the sample (14).

Having described the object of the present application, as well as a preferred albeit not limited embodiment and use of it, other configurations of varying dimensions and constructive details are possible without modifying the essence of the object, as contained in the following claims.

## Claims

1. Partially disposable electrophoresis device, **characterised in that** in comprises the following elements:
● A first element (10) comprising of an open container (11) that serves as an electrophoresis tank, as a means for transporting the gel (12) and as a residue container once electrophoresis is completed, with said first element (10) being disposable
● A second element (20) comprising of an inner lid (21) which contains platinum wires (26), (26'), connected to a power supply, hermetically adjustable over the open container (11) during electrophoresis.

2. Partially disposable electrophoresis device, according to claim 1, **characterised in that** the second element (20) comprises of an outer lid (23), that fits over the inner lid (21), by means of connectors (25) (25') and (27) (27'), with the outer lid (23) comprising electrical connection cables (28) to the power source.

3. Partially disposable electrophoresis device, according to claim 2, **characterised in that** the device comprises a lower tray (24) whereon the open container (11) is placed, with the inner lid (21) fitted, for electrophoresis to take place, and **in that** the outer lid (23) adjusts hermetically to said lower tray (24), covering the open container (11) and the inner lid (21), during electrophoresis.

4. Partially disposable device according to claim 1, **characterised in that** the first element (10) comprises of a lid (13) that hermetically closes the open container (11), for transport and disposal.

5. Partially disposable electrophoresis device according to claim 1, **characterised in that** it comprises a support tank (22) for storing the inner lid (21) while the second element (20) is not in use.

6. Partially disposable electrophoresis device according to claim 1, **characterised in that** the first element (10) includes the gel (12).

7. Partially disposable electrophoresis device according to claim 6, **characterised in that** the gel (12) is an agarose gel.

8. Partially disposable electrophoresis device according to claim 1, **characterised in that** the base of the open container (11) has points or protrusions (16) that make it possible to position the gel (12).

9. Partially disposable electrophoresis device according to claim 1, **characterised in that** the platinum wires (26) (26') are arranged vertically in relation to the inner lid (21) in such a way that when the inner lid (21) is fitted over the open container (11), the free ends of the platinum wires are arranged inside the open container (11).

10. Partially disposable device according to claim 9, **characterised in that** the length of the platinum wires is such that when the open container (11) contains a migration solution, the free ends of the platinum wires are left partially submerged in said migration solution.
